Europäisches Patentamt

European Patent Office

Office européen des brevets

(11) Publication number: **0 476 385 B1**

# EUROPEAN PATENT SPECIFICATION

(45) Date of publication of patent specification: **05.04.95**   (51) Int. Cl.[6]: **C01B 17/12**, C08K 3/06, C08L 21/00

(21) Application number: **91114486.3**

(22) Date of filing: **28.08.91**

(54) **Process for the preparation of a granular insoluble sulfur having improved flowability, vulcanizing agent and rubber composition containing said sulfur.**

(30) Priority: **28.08.90 JP 227429/90**
**30.03.91 JP 92836/91**

(43) Date of publication of application:
**25.03.92 Bulletin 92/13**

(45) Publication of the grant of the patent:
**05.04.95 Bulletin 95/14**

(84) Designated Contracting States:
**DE FR**

(56) References cited:
**EP-A- 0 011 384     EP-A- 0 170 104**
**FR-A- 2 108 435     FR-A- 2 603 273**
**GB-A- 1 096 599     US-A- 2 667 406**

**PATENT ABSTRACTS OF JAPAN vol. 12, no. 128 (C-489)20 April 1988 & JP-A-62 246 810 ( SHIKOKU CHEM CORP )**

(73) Proprietor: **SHIKOKU CHEMICALS CORPORA-TION**
**147-1-Minato-machi**
**Marugame-shi**
**Kagawa-ken (JP)**

(72) Inventor: **Koga, Yukihiro**
**5, Wakaba-cho 8-chome,**
**Tadotsu-cho**
**Nakatadotsu-gun,**
**Kagawa-ken (JP)**
Inventor: **Matsuoka, Tadahiko**
**260, Nishi-nijo, Kakihara,**
**Yoshino-cho**
**Itano-gun,**
**Tokushima-ken (JP)**
Inventor: **Sasa, Masatoshi**
**667, Higashibun,Iino-cho**
**Marugame-shi,**
**Kagawa-ken (JP)**

(74) Representative: **Hiltl, Elmar, Dr. et al**
**DIEHL.GLAESER.HILTL & PARTNER,**
**Patentanwälte,**
**Postfach 19 03 65**
**D-80603 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for the preparation of a granular insoluble sulfur having an improved flowability and also to a rubber composition comprising this insoluble sulfur. According to the present invention, the workability at the rubber compounding operation can be improved and the rubber characteristics of the rubber composition can be improved at the vulcanizing step.

In general, insoluble sulfur is composed of fine particles having a particle size of about scores of microns or a smaller particle size, and during the handling, insoluble sulfur is readily scattered in the form of dusts or is readily statically charged. Therefore, troubles such as fire are readily caused during the handling.

For overcoming this disadvantage, at least one rubber process oil selected from the group consisting of naphthenic oils, aromatic oils and paraffinic oils is incorporated into a powder of insoluble sulfur and the insoluble sulfur is used as a so-called oil-processed insoluble sulfur.

This oil-processed insoluble sulfur is advantageous over unprocessed insoluble sulfur in that scattering or occurrence of electrostatic troubles is controlled, but the oil-processed insoluble sulfur is defective in that the flowability is poor and the sulfur adheres to various devices and meters during the handling. For examples, when the insoluble sulfur is measured by a meter and the insoluble sulfur is transferred to the next step, a part of the insoluble sulfur adheres to the inner wall of the vessel and reduces the precision of the measurement, with the result that the composition of the rubber is changed and a dispersion of the physical properties of the rubber composition is caused.

As the means for improving the flowability of insoluble sulfur, there is known a method in which oil-processed insoluble sulfur is granulated by compression molding.

This method, however, is defective in that the insoluble sulfur agglomerates rigidly and when the insoluble sulfur is kneaded with rubber, the granular insoluble sulfur does not collapse to the original powdery state but is left as it is, and therefore, the dispersibility in rubber is reduced and the rubbery characteristics vary widely.

Japanese Unexamined Patent Publication No. 62-246810 teaches a method in which a dry powder of insoluble sulfur and a rubber process oil are mixed at a predetermined mixing ratio, the mixture is granulated and a dry powder of insoluble sulfur is spread on the granulation product. However, this method is defective in that when the mixing ratio of the rubber process oil is low, the powdery insoluble sulfur spread on the surface is scattered and as the amount added of the rubber process oil is increased, an adhesion trouble is caused.

It is a primary object of the present invention to solve the above-mentioned problem of the flowability of insoluble sulfur, especially the problem of adhesion to the vessel wall, to improve the dispersibility of insoluble sulfur in rubber and to provide a rubber composition having a reduced dispersion of the rubber characteristics.

FR-A-2108435 teaches a method for improving the dispersibility of insoluble sulfur in rubbers by the use of a dispersion agent. The treated sulfur may consist of a mixture of insoluble sulfur and a minor portion of soluble sulfur. According to the known process the sulfur is mixed with a solvent having dissolved therein a dispersion agent followed by evaporation in order to remove the solvent from the mixture and to leave the dispersion agent on the surface of the sulfur particles.

From FR-A-2603273 there was known a process to apply a rubber processing oil to insoluble sulfur powder. The solvent is removed from the insoluble sulfur by filtration. Therefore such filtration causes also the removing of the portion of the soluble sulfur originally contained in the insoluble sulfur powder.

Under the above-mentioned background, the present inventors conducted various experiments and research works and they found that by mixing and granulating a powder of insoluble sulfur with an organic solvent or a combination of an organic solvent and a rubber process oil, heating the granulation product at a temperature lower than 120°C to evaporate the organic solvent and to form a granular product of the insoluble sulfur or the mixture of the insoluble sulfur and the rubber process oil, the flowability is improved and the problem of adhesion to the vessel wall is solved, and that since this granular product has an appropriate break strength, the granular product readily collapses at the time of kneading it with rubber and the insoluble sulfur restores the original powdery state, and therefore, the dispersibility of the granular product in rubber is very high and a rubber composition having a reduced dispersion of rubber characteristics can be obtained. The present invention has now been completed based on this finding.

A small amount, generally about 2 to 4% by weight, of soluble sulfur is contained in a powder of insoluble sulfur, and if an organic solvent is added to this insoluble sulfur, the soluble sulfur is dissolved in the organic solvent and acts as a binder and the insoluble sulfur can be readily shaped into a granular product. Even after the organic solvent is removed from this granular product, the soluble sulfur still acts as the binder, and therefore, a granular insoluble sulfur having an appropriate particle break strength can be obtained.

This granular insoluble sulfur has a good flowability, and when the granular insoluble sulfur is kneaded with rubber, the insoluble sulfur readily collapses and restores the original powdery state, with the result that a good dispersibility and good rubber characteristics can be stably maintained.

As typical examples of the organic solvent used for preparing the granular insoluble sulfur of the present invention, there can be mentioned paraffinic hydrocarbon solvents such as n-hexane, halogenated hydrocarbon solvents such as teterachloromethane, alcohol solvents such as isopropyl alcohol, and aromatic hydrocarbons such as toluene. These solvents do not dissolve the starting insoluble sulfur therein but can dissolve soluble sulfur which is contained in a small amount in the starting insoluble sulfur. Organic solvents having a boiling point lower than 120°C are preferably used.

The organic solvent is used in such an amount that the starting insoluble sulfur can be granulated. More specifically, the organic solvent is used in an amount of 0.3 to 0.7 liter per kg of the starting insoluble sulfur. If the amount of the organic solvent used is smaller than 0.3 liter per kg of the starting insoluble sulfur, granulation of the powdery insoluble sulfur becomes difficult, and if the amount of the organic solvent used is larger than 0.7 liter per kg of the starting insoluble sulfur, the product becomes creamy and no good results can be obtained.

Granulation of the starting sulfur powder is accomplished by adding the powder to an organic solvent as mentioned above and stirring the mixture. A Henschel mixer, a super mixer or other high-speed mixer can be used as the mixing stirrer.

Then, the obtained granular product is heated at a temperature lower than 120°C to evaporate the organic solvent. In the case where an organic solvent having a boiling point higher than 120°C is used, heating should be conducted under a reduced pressure so that the temperature of the insoluble sulfur is lower than 120°C. The lower limit of the heating temperature is not particularly critical, so far as the evaporation of the organic solvent is effectively accomplished. It is generally preferred that the heating temperature be higher than room temperature.

In an embodiment of the present invention where an organic solvent and a rubber process oil are added to the insoluble sulfur, it is necessary that the organic solvent and the rubber process oil should be used in amounts of 0.2 to 0.6 liter and 0.01 to 0.30 kg, respectively, per kg of the insoluble sulfur.

At least one member selected from the group consisting of naphthenic, aromatic and paraffinic rubber process oils having a high boiling point is preferably used for carrying out the present invention.

The granular insoluble sulfur obtained according to the present invention can be used as a vulcanizing agent for rubbers, such as natural rubber, butadiene rubber, synthetic isoprene rubber, nitrile-butadiene rubber, styrene-butadiene rubber and chloroprene rubber, directly or after sieving or the like if necessary.

More specifically, in accordance with the present invention, there also is provided a particulate rubber vulcanizing agent comprising 96 to 98% by weight of fine particles of an insoluble sulfur matrix and 4 to 2% by weight of soluble sulfur, and optionally, 0.01 to 0.30 kg, per kg of the sum of the insoluble sulfur and the soluble sulfur, of a rubber process oil included in the particles, and having an average particle size of from 8 to 60 mesh (2.38 to 0.25 mm) and a particle break strength lower than 30 g, wherein the heat stability TS, represented by the following formula, of the vulcanizing agent is at least 85%:

$$TS = \frac{W_1}{W_0 \times \dfrac{100 - W_2}{100}} \times 100$$

wherein $W_0$ represents the weight (g) of the sample, $W_2$ represents the amount (% by weight) of the rubber process oil, and $W_1$ represents the amount (g) of the insoluble sulfur left when a test tube charged with 20 ml of mineral oil is immersed in an oil bath maintained at 105°C, 1.2 g of the sample is added into the test tube at the point when the mineral oil temperature has reached 105°C, the test tube is heated for 15 minutes, the test tube is taken out from the oil bath, the test tube is rapidly cooled, the sample in the test tube is sufficiently washed with carbon disulfide to dissolve the soluble sulfur completely in carbon disulfide, and the residual solid is recovered by filtration and dried.

3

In the rubber composition of the present invention, the above-mentioned granular product composed of the insoluble sulfur or the insoluble sulfur and process oil should be incorporated into rubber in such an amount that the amount of the insoluble sulfur is 0.5 to 10 parts by weight per 100 parts by weight of the rubber. If the amount added of the insoluble sulfur exceeds the predetermined amount, the thermal aging property of the rubber is degraded, and if the amount added of the insoluble sulfur is smaller than the predetermined amount, the rubber is not sufficiently crosslinked.

The insoluble sulfur prepared according to the process of the present invention is a granular product having an appropriate particle break strength. Therefore, when the insoluble sulfur is incorporated into rubber, scattering of dust is not caused and the granular product does not adhere to the vessel wall, and therefore, the workability can be highly improved.

When the rubber composition of the present invention is kneaded, particles of the insoluble sulfur readily collapse to a powdery state, and therefore, the dispersibility of the insoluble sulfur in the rubber is very good, blooming is not caused and the dispersion of the rubber characteristics can be reduced.

Examples

The present invention will now be described in detail with reference to the following examples and comparative examples.

In the examples and comparative examples, the physical properties were determined according to the following methods.

Particle Break strength:

The sample is placed on an electronic balance and pressed by a glass rod, and the particle break strength is expressed by the value of the electronic balance read when the sample is broken.

Residual Adhering Amount:

A stainless steel round-bottomed cylindrical vessel (having a diameter of 100 mm and a height of 60 mm), charged with 100 g of the sample, is attached to a shaking machine (Model SA-31 supplied by Yamato Kagaku), and the cylindrical vessel is shaken for 10 minutes at an amplitude of 30 mm and a frequency of 240 reciprocations per minute. The vessel is quietly detached from the shaking machine, and the vessel is inclined by 180° to naturally discharge the sample. The amount of the sample left in the vessel is measured.

Heat Stability:

A test tube charged with 20 ml of mineral oil is immersed in an oil bath maintained at 105°C and 1.2 g of the sample is added into the test tube at the point where the oil temperature has reached 105°C. The test tube is heated for 15 minutes. Then, the test tube is taken out from the oil bath and the test tube is rapidly cooled. The sample in the test tube is sufficiently washed with carbon disulfide to dissolve the soluble sulfur completely in carbon disulfide, and the residual solid is recovered by filtration and dried. The amount of the residual insoluble sulfur is measured, and the heat stability is calculated from this amount of the residual insoluble sulfur according to the above-mentioned formula,

Dispersibility of Insoluble sulfur in Rubber:

Natural rubber (100 g) is wound on a roll maintained at 45 to 55°C and predetermined amounts of insoluble sulfur and other additives are added to the rubber. The rolled sheet is folded back and roll passing is conducted 6 times. The obtained sheet is cut with a knife and the cut surface is visually examined to evaluate the dispersibility.

Blooming:

The rubber composition prepared for the above-mentioned dispersibility test is passed through a roll heated at 100°C for 5 minutes and is then allowed to stand still at room temperature. Occurrence of blooming is judged based on whether or not sulfur particles are precipitated on the surface of the composition.

Physical Properties of the vulcanized Product:

An insoluble sulfur-incorporated rubber composition is press-cured at a temperature of 160°C for 20 minutes and the test is carried out according to JIS K-6301. The hardness is determined by using a tester of type A of the same standard.

Example 1

In a high-speed mixing machine (Spartan Ryuzer Model RMO-50H supplied by Fuji Powder) having a total volume of 70 liters, 10 kg of powdery insoluble sulfur having a purity of 97% and containing 0.2% of $\alpha$-methylstyrene (the same insoluble sulfur was used in the subsequent examples) was charged, and 6 liters of n-hexane was further charged while maintaining the revolution number of the main screw of the mixer at 2000 to 2500 rpm. Mixing with stirring was conducted for 10 minutes, and the obtained granular product was charged into a hot air drier set at a temperature of 70°C and dried for 1 hour to evaporate n-hexane and to shape all of the powdery insoluble sulfur into a granular product.

The granular product was composed of uniform particles having a particle size of 0.5 mm, and the break strength was 8 to 25 g, the residual adhering amount was 2.5 to 7.0 g and the heat stability was 86.3%.

Example 2

The same mixer as used in Example 1 was charged with 10 kg of powdery insoluble sulfur having a purity of 97%, and 1.1 kg of a rubber process oil composed of naphthenic, aromatic and paraffinic hydrocarbons (#310 supplied by Nippon San Sekiyu) was added to the powdery insoluble sulfur with stirring. Then, 4.5 liters of n-hexane was further added and mixing with stirring was conducted for 10 minutes. The obtained granular product was charged in a hot air drier set at a temperature of 70°C and dried for 1 hour to obtain a process oil-containing granular insoluble sulfur.

The granular product was composed of uniform particles containing 9.9% of the rubber process oil and having a particle size of about 0.5 mm, and the break strength was 5 to 25 g, the residual adhering amount was 3.0 to 8.0 g and the heat stability was 86.6%.

Example 3

The same mixing machine as used in Example 1 was charged with 10 kg of powdery insoluble sulfur having a purity of 97%, and 6 liters of isopropyl alcohol was added thereto with stirring, and mixing with stirring was conducted for 10 minutes. The obtained granular product was charged in a hot air drier set at a temperature of 70°C and dried for 1 hour to evaporate isopropyl alcohol and to shape all of the powdery insoluble sulfur to a granular product.

The granular product was composed of uniform particles having a particle size of about 0.5 mm, and the break strength was 7 to 26 g, the residual adhering amount was 2.2 to 7.5 g and the heat stability was 86.0%.

Example 4

The same mixing machine as used in Example 1 was charged with 10 kg of powdery insoluble sulfur having a purity of 97%, and 1.1 kg of the same rubber process oil as used in Example 2 was added thereto and 4.5 liters of isopropyl alcohol was further added. Mixing with stirring was conducted for 10 minutes, and the obtained granular product was charged in a hot air drier set at a temperature of 70°C to evaporate isopropyl alcohol and to obtain a rubber process oil-containing granular insoluble sulfur.

The obtained granular product was composed of uniform particles containing 9.9% of the rubber process oil and having an average particle size of about 0.5 mm, and the break strength was 6 to 24 g, the residual adhering amount of 2.4 to 8.0 g and the heat stability was 86.6%.

Comparative Example 1

A Lötige mixer having a volume of 300 liters was charged with 135 kg of powdery insoluble sulfur having a purity of 97% and 15 kg of the same rubber process oil as used in Example 2, and mixing with stirring was conducted for 10 minutes while maintaining the revolution number of the main screw at 115 rpm, but granular insoluble sulfur was not obtained. The resultant insoluble sulfur contained 10% of the rubber process oil, and the residual adhering amount was 60 to 90 g and the heat stability was 86.5%.

Example 5

A rubber composition was prepared by uniformly kneading 100 parts by weight of natural rubber, 50 parts by weight of HAF carbon black, 5 parts by weight of zinc white, 2 parts by weight of stearic acid, 1 part by weight of phenyl-1-naphthylamine, 3 parts by weight of a rubber process oil, 0.5 part by weight of N-oxydiethylene-2-benzothiazole sulfonamide and 6 parts by weight of the granular insoluble sulfur obtained in Example 1 by a roll mixer.

The obtained rubber composition was subjected to the evaluation tests. The obtained results are shown in the following Table.

Example 6

A rubber composition was prepared in the same manner as described in Example 5 except that the granular insoluble sulfur obtained in Example 2 was used instead of the granular insoluble sulfur obtained in Example 1. The rubber composition was subjected to the evaluation tests. The obtained results are shown in the following Table.

Comparative Example 2

A rubber composition was prepared in the same manner as described in Example 5 except that the same powdery insoluble sulfur (having a residual adhering amount of 60 to 90 g) as obtained in Comparative Example 1 was used instead of the granular insoluble sulfur obtained in Example 1. The rubber composition was subjected to the evaluation tests. The obtained results are shown in the following Table.

Comparative Example 3

A rubber composition was prepared in the same manner as described in Example 5 except that a granular insoluble sulfur (having a break strength of at least 100 g and a residual adhering amount of 1.0 to 5.0 g) obtained by compression-molding a powdery insoluble sulfur containing 10% of a rubber process oil under a pressure of 70 to 80 kg/cm$^2$ by using a roller compacter was used as the insoluble sulfur. The rubber composition was subjected to the evaluation tests. The obtained results are shown in the following Table.

6

Table 1

| Evaluation Tests | Example 5 | Example 6 | Comparative Example 2 | Comparative Example 3 |
|---|---|---|---|---|
| Workability: dispersibility of insoluble sulfur | good | good | slightly insufficient | insufficient |
| blooming | not caused | not caused | not caused | slightly caused |
| Properties of Vulcanized Product: | | | | |
| tensile strength (kg/cm$^2$) | 255 | 255 | 240 | 230 |
| elongation at break (%) | 451 | 450 | 440 | 430 |
| 100% modulus (kg/cm$^2$) | 56 | 55 | 50 | 42 |
| 300% modulus (kg/cm$^2$) | 167 | 165 | 160 | 154 |
| hardness | 76 | 75 | 75 | 74 |

**Claims**

1. A process for preparing granular insoluble sulfur with an improved flowability, wherein there is contacted a powder of insoluble sulfur containing soluble sulfur, with an organic solvent, characterized by granulating a mixture of said insoluble sulfur containing 2 to 4% by weight of soluble sulfur and an organic solvent in an amount of 0.3 to 0.7 l per kg of the insoluble sulfur and heating said mixture to a temperature lower than 120 °C to evaporate the organic solvent.

2. A process according to claim 1, characterized by using an organic solvent selected from the group consisting of n-hexane, tetrachloromethane, isopropyl alcohol, and toluene.

3. A process for preparing granular insoluble sulfur with an improved flowability, wherein there is contacted a powder of insoluble sulfur containing soluble sulfur, with an organic solvent, characterized by granulating a mixture of said insoluble sulfur containing 2 to 4% by weight of soluble sulfur with an organic solvent in an amount of 0.2 to 0.6 l per kg of insoluble sulfur and a rubber process oil in an amount of 0.01 to 0.30 kg per kg of insoluble sulfur as well as heating said mixture to a temperature lower than 120°C to evaporate the organic solvent.

4. A particulate rubber vulcanizing agent, characterized by 96 to 98 % by weight of fine particles of an insoluble sulfur matrix and 4 to 2 % by weight of soluble sulfur, and optionally, 0.01 to 0.30 kg, per kg of the sum of the insoluble sulfur and the soluble sulfur, of a rubber process oil included in the particles, and having an average particle size of from 2.38 to 0.25 mm and a particle break strength lower than 30 g, wherein the heat stability TS, represented by the following formula, of the vulcanizing agent is at least 85 %

$$TS = \frac{W_1}{W_O \times \dfrac{100 - W_2}{100}} \times 100$$

wherein $W_O$ represents the weight (g) of the sample, $W_2$ represents the amount (% by weight) of the rubber process oil, and $W_1$ represents the amount (g) of the insoluble sulfur left when a test tube charged with 20 ml of mineral oil is immersed in an oil bath maintained at 105°C, 1.2 g of the sample is added into the test tube at the point when the mineral oil temperature has reached 105°C, the test tube is heated for 15 minutes and then taken out from the oil bath as well as rapidly cooled, the sample in the test tube is sufficiently washed with carbon disulfide to dissolve the soluble sulfur completely in carbon disulfide, and the residual solid is recovered by filtration and dried.

5. A rubber composition, characterized by a content of 100 parts by weight of a rubber and 0.5 to 10 parts by weight of a particulate rubber vulcanizing agent according to claim 4.

**Patentansprüche**

1. Verfahren zur Herstellung von granuliertem unlöslichem Schwefel mit verbesserter Fließfähigkeit, bei dem ein Pulver von unlöslichem Schwefel mit einem Gehalt an löslichem Schwefel mit einem organischen Lösungsmittel in Kontakt gebracht wird, gekennzeichnet durch Granulieren eines Gemisches des unlöslichen Schwefels mit einem Gehalt an 2-4 Gew.% löslichem Schwefel und eines organischen Lösungsmittels in einer Menge von 0,3-0,7 l/kg des unlöslichen Schwefels und Erwärmen des Gemisches auf eine Temperatur unterhalb von 120°C, um das organische Lösungsmittel abzudampfen.

2. Verfahren nach Anspruch 1, gekennzeichnet durch die Verwendung eines organischen Lösungsmittels, das aus der Gruppe n-Hexan, Tetrachlormethan, Isopropylalkohol und Toluol ausgewählt ist.

3. Verfahren zur Herstellung von granuliertem unlöslichem Schwefel mit verbesserter Fließfähigkeit, bei dem ein Pulver von unlöslichem Schwefel mit einem Gehalt an löslichem Schwefel mit einem organischen Lösungsmittel in Kontakt gebracht wird, gekennzeichnet durch Granulieren eines Gemisches des unlöslichen Schwefels mit einem Gehalt an 2-4 Gew.% löslichem Schwefel mit einem organischen Lösungsmittel in einer Menge von 0,2-0,6 l/kg des unlöslichen Schwefels und einem Kautschuk-Prozeßöl in einer Menge von 0,01-0,30 kg/kg des unlöslichen Schwefels sowie durch Erwärmen des Gemisches auf eine Temperatur unterhalb von 120°C, um das organische Lösungsmittel abzudampfen.

4. Teilchenförmiges Kautschuk-Vulkanisationsmittel, gekennzeichnet durch einen Gehalt an 96-98 Gew.% an feinen Teilchen einer unlöslichen Schwefelmatrix und 4-2 Gew.% an löslichem Schwefel und ggf. 0,01-0,30 kg/kg der Summe aus unlöslichem Schwefel und löslichem Schwefel an einem Kautschuk-Prozeßöl, das in den Teilchen enthalten ist, und durch eine durchschnittliche Teilchengröße von 2,38-0,25 mm und eine Teilchen-Bruchfestigkeit unter 30 g, wobei die Wärmestabilität TS, die durch die folgende Formel angegeben wird, des Vulkanisationsmittels mindestens 85% beträgt

$$TS = \frac{W_1}{W_O \times \dfrac{100 - W_2}{100}} \times 100$$

worin $W_O$ das Gewicht (g) der Probe bedeutet, $W_2$ die Menge (Gew.-%) des Kautschuk-Prozeßöls bedeutet und $W_1$ die Menge (g) des unlöslichen Schwefels bedeutet, der zurückbleibt, wenn ein mit 20 ml Mineralöl beschicktes Reagenzglas in ein auf 105°C gehaltenes Ölbad getaucht wird, 1,2 g der Probe zu dem Zeitpunkt, wenn die Temperatur des Mineralöls 105°C erreicht hat, zugegeben werden, das Reagenzglas 15 Minuten erwärmt wird und anschließend aus dem Ölbad entnommen und rasch gekühlt wird, die Probe im Reagenzglas gründlich mit Kohlenstoffdisulfid gewaschen wird, um den löslichen Schwefel vollständig im Kohlenstoffdisulfid zu lösen, und der restliche Feststoff durch Filtration gewonnen und getrocknet wird.

5. Kautschukzusammensetzung, gekennzeichnet durch einen Gehalt an 100 Gewichtsteilen eines Kautschuks und 0,5 bis 10 Gewichtsteilen eines teilchenförmigen Kautschuk-Vulkanisationsmittels nach Anspruch 4.

**Revendications**

1. Procédé pour préparer du soufre insoluble granulé avec une capacité à l'écoulement améliorée, dans lequel on met en contact une poudre de soufre insoluble contenant du soufre soluble, avec un solvant organique, caractérisé par la granulation d'un mélange dudit soufre insoluble contenant 2 à 4% en poids de soufre soluble et un solvant organique à raison de 0,3 à 0,7 l par kg du soufre insoluble et en chauffant ledit mélange à une température inférieure à 120°C pour évaporer le solvant organique.

2. Procédé selon la revendication 1, caractérisé par l'utilisation d'un solvant organique choisi dans le groupe constitué du n-hexane, du tétrachlorométhane, de l'alcool isopropylique et du toluène.

3. Procédé de préparation de soufre insoluble granulé avec une capacité à l'écoulement améliorée, dans lequel on met en contact une poudre de soufre insoluble contenant du soufre soluble avec un solvant organique, caractérisé par la granulation d'un mélange dudit soufre insoluble contenant 2 à 4% en poids de soufre soluble avec un solvant organique à raison de 0,2 à 0,6 l par kg de soufre insoluble et une huile de traitement de caoutchouc à raison de 0,01 à 0,30 kg par kg de soufre insoluble ainsi qu'en chauffant ledit mélange à une température inférieure à 120°C pour évaporer le solvant organique.

4. Agent de vulcanisation particulaire de caoutchouc, caractérisé par 96 à 98% en poids de particules fines d'une matrice de soufre insoluble et 4 à 2% en poids de soufre soluble, et éventuellement, 0,01 à 0,30 kg, par kg de la somme du soufre insoluble et du soufre soluble, d'une huile de traitement de caoutchouc incluse dans les particules, et ayant une granulométrie moyenne de 2,38 à 0,25 mm et une résistance au bris des particules inférieure à 30 g, dans lequel la stabilité à la chaleur TS, représentée par la formule suivante, de l'agent de vulcanisation est d'au moins 85%

$$TS = \frac{W_1}{W_O \times \dfrac{100 - W_2}{100}} \times 100$$

dans laquelle $W_o$ représente le poids (g) de l'échantillon, $W_2$ représente la quantité (% en poids) de l'huile de traitement de caoutchouc et $W_1$ représente la quantité (g) du soufre insoluble restant quand on immerge un tube à essai avec 20 ml d'huile minérale est immergée dans un bain d'huile maintenu à 105°C, on ajoute 1,2 g de l'échantillon dans le tube à essai au moment où la température de l'huile minérale a atteint 105°C, on chauffe le tube à essai pendant 15 minutes puis on sort du bain d'huile et refroidi rapidement, l'échantillon dans le tube à essai est suffisamment lavé avec du disulfure de carbone pour dissoudre complètement le soufre soluble dans le disulfure de carbone, et le solide résiduel est récupéré par filtration et séché.

5. Composition de caoutchouc, caractérisé par un contenu de 100 parties en poids d'un caoutchouc et de 0,5 à 10 parties en poids d'un agent de vulcanisation particulaire du caoutchouc selon la revendication 4.